# EUROPÄISCHE PATENTSCHRIFT

(11) **EP 0 799 249 B1**
(45) Veröffentlichungstag und Bekanntmachung des Hinweises auf die Patenterteilung: **03.03.1999**
(21) Anmeldenummer: 95942169.4
(22) Anmeldetag: 15.12.1995
(51) Int. Cl.: C08F 2/28, C09D 157/00

(54) **POLYMER-DISPERSIONEN AUF BASIS EINES KATIONISCHEN POLYURETHANS**
CATIONIC POLYURETHANE-BASED POLYMER DISPERSIONS
DISPERSIONS POLYMERES A BASE D'UN POLYURETHANNE CATIONIQUE

(30) Priorität: 23.12.1994 DE 4446439
(43) Veröffentlichungstag der Anmeldung: 08.10.1997
(73) Patentinhaber: HOECHST AKTIENGESELLSCHAFT, 65929 Frankfurt am Main (DE)
(72) Erfinder: SCHAFHEUTLE, Markus, A., D-65239 Hochheim (DE); VÖLKER, Achim, D-65197 Wiesbaden (DE); WEHNER, Susanne, D-65606 Villmar (DE); KLEIN, Klausjörg, D-42289 Wuppertal (DE)
(86) Internationale Anmeldenummer: EP9504981
(87) Internationale Veröffentlichungsnummer: WO9620224

(56) Entgegenhaltungen:
- EP-A- 0 334 032
- DE-A- 3 718 520
- GB-A- 2 068 391

## Beschreibung

Die Erfindung betrifft Dispersionen von kationisch solubilisierten Polyurethanen, ein Verfahren zu ihrer Herstellung und ihre Verwendung als Additiv in kationischen Elektrotauchlacken.

In der GB-A 2 068 391 wird ein Verfahren zur Herstellung von Polymerlatices beschrieben, wobei wäßrige Emulsionen polymerisierbarer Monomerer in Gegenwart eines Aminsalzes eines Polyurethan-Präpolymeren polymerisiert werden. Das Polyurethan-Präpolymer wird in vier Stufen durch Umsetzung eines hydrophilen Polyols mit einem Überschuß eines Polyisocyanats, Blockieren der Isocyanatgruppen mit einem Ketoxim, Umsatz des mit verkappten Isocyanatgruppen terminierten Präpolymeren mit einem mehrfunktionellen Amin, und schließlich Zusatz von Säure unter Salzbildung hergestellt.

In der DE-A 37 18 520 wird die Verwendung der dort offenbarten Emulsionspolymerisate als Papierleimungsmittel beschrieben. Als Emulgator sind kationisch modifizierte Polyurethane eingesetzt.

In der EP-A 0 334 032 wird ein Verfahren zur Herstellung von Dispersionen von Polymerisaten beschrieben durch Polymerisation olefinisch ungesättigter Monomerer in Wasser in Gegenwart von Oligourethanen mit verzweigter Molekülstruktur und hydrophilen Gruppen, die ausschließlich oder vorwiegend endständig in dem Oligourethan eingebaut sind. Die Dispersionen werden als Überzugsmittel verwendet.

Das Verfahren der Elektrotauchlackierung hat sich bei der Beschichtung von Blechen als vorteilhaft erwiesen. Bei der Beschichtung von Kanten, speziell scharfen Kanten, lassen sich jedoch nur niedrige Schichtstärken erzielen. Eine Erhöhung der Pigmentkonzentration verbessert zwar die Beschichtung in Kantennähe, jedoch nimmt dadurch die Oberflächenrauhigkeit zu. Eine wesentliche Erhöhung der Pigmentierung ist auch aus wirtschaftlichen Gründen unerwünscht. Auch durch die Anwesenheit von Mikrogelen im Bindemittel läßt sich die Kantenbeschichtung verbessern. Solche Verfahren sind beispielsweise in der US-A 4,788,246, der EP-A 0 463 474, der EP-A 0 282 000 und der DE-A 42 04 581 beschrieben.

Diese Herstellung dieser Mikrogel-haltigen Bindemittel erfordert zusätzliche Reaktionsstufen. Eine weitgehende chemische Ähnlichkeit der Mikrogelpartikel mit dem Bindemittel ist erforderlich, um Entmischung zu vermeiden. Der Dichteunterschied zwischen Mikrogel und der Badflüssigkeit darf nur gering sein, um Absetzen zu verhindern.

Mikrogelteilchen mit einer Kern-Schale-Struktur sind vorgeschlagen worden (European Coatings Journal, (1), S. 6ff, 1991). Ionische, bevorzugt kationische Gruppen in dem Material der Schale verbessern die Hydrophilie und die Stabilität des Mikrogelteilchen-haltigen Tauchlackbades.

Die Herstellung dieser Mikrogelteilchen erfolgt durch Zusatz von Wasser zu einer Harzmischung, dabei bildet sich eine Dispersion von Teilchen, die eine Kern-Schale-Struktur haben, in Wasser. Eines der Harze aus der Mischung bildet dabei die Schale, das andere den Kern. Diese primären Teilchen werden durch Erhitzen auf 80 bis 90 °C während 1 bis 7 Stunden vernetzt. Die vernetzte Dispersion wird dem Tauchlackbad zugesetzt. Bei diesem Verfahren müssen die beiden Harze zunächst eine homogene Mischung bilden, nach Wasserzusatz muß sich durch unterschiedliche Hydrophilie eine Kern-Schale-Struktur bilden. Daher ist man in der Kombination der Materialien eingeschränkt.

Eine andere Lösung wird in der EP-A 0 249 884 beschrieben: Hier wird eine Mischung von verkappten Isocyanaten als Härter eingesetzt, wobei die Dissoziationstemperatur der einen Isocyanatkomponente zwischen 60 und 120 °C liegt, die der zweiten Komponente um 40 °C höher liegt. Das bei niedriger Temperatur dissoziierende blockierte isocyanat verdickt das Bindemittel bereits frühzeitig und verhindert das Wegfließen von der Kante. Diese Bindemittel neigen wegen der erhöhten Reaktivität der einen Isocyanatkomponente zu Sedimentbildung im Bad durch vorzeitiges Abbinden, die Badlebensdauer wird nachteilig beeinflußt. Der Kantenschutzeffekt ist abhängig von den jeweiligen Mengen der Isocyanate in der Badflüssigkeit und kann nicht gezielt variiert werden.

Die Aufgabe der Erfindung besteht daher darin, den Kantenschutz bei der kationischen Elektrotauchlackierung zu verbessern, ohne die Nachteile der aus dem Stand der Technik bekannten Lösungen. Eine weitere Aufgabe bestand darin, diese Verbesserung durch einen Zusatz zu erzielen, der zu einem ansonsten fertigen Bad in einer dem Verwendungszweck jeweils angepaßten Menge zugegeben werden kann und der mit den üblicherweise verwendeten Badflüssigkeiten bestens verträglich ist.

Überraschenderweise ergab sich, daß eine Dispersion aus Vinylpolymeren mit einem kationischen Polyurethan als Emulgator mit allen üblicherweise verwendeten Badflüssigkeiten verträglich ist. Als Zusatz in kationischen Tauchlackbädern verbessert diese Dispersion insbesondere in vernetztem Zustand (Mikrogel-Dispersion) den Kantenschutz bei der Tauchlackierung erheblich. Weiter wurde gefunden, daß diese Dispersionen in unvernetztem Zustand auch als Bindemittel für Druckfarben hervorragend geeignet sind, da sie wegen ihres niedrigen Emulgatorgehalts rasch trocknen und dem kationischen "deinking"-Verfahren leicht zugänglich sind.

Gegenstand der Erfindung ist die Verwendung einer wäßrigen Dispersion insbesondere von Mikrogelteilchen, erhältlich durch radikalisch initiierte Emulsionspolymerisation von einem oder mehreren Vinylmonomeren in Wasser in Gegenwart eines Emulgators auf Basis von kationisch solubilisierten Polyurethanen als Zusatz in Elektrotauchlackbädern.

Gegenstand der Erfindung ist auch ein Verfahren zum Beschichten von elektrisch leitfähigen Substraten nach dem Elektrotauchlackverfahren, wobei das Substrat als Kathode geschaltet ist, und in der Badflüssigkeit ein Zusatz von 0,1 bis 10 % der Dispersion nach Anspruch 1 verwendet wird.

Gegenstand der Erfindung ist weiter die Verwendung der erfindungsgemäßen Mikrogelteilchendispersionen als Zusatz in Elektrotauchlackbädern zur Verbesserung des Kantenschutzes bei der Elektrotauchlackierung.

Die Erfindung betrifft auch ein Verfahren zum Beschichten elektrisch leitfähiger Substrate, bei dem das Substrat in ein wäßriges Elektrotauchlackbad, das mindestens ein kathodisch abscheidbares Kunstharz enthält, eingetaucht wird, das Substrat als Kathode geschaltet wird, durch Gleichstrom ein Film auf dem Substrat abgeschieden wird, das Substrat aus dem Bad entfernt wird und der abgeschiedene Lackfilm eingebrannt wird. Das Verfahren ist dadurch gekennzeichnet, daß das wäßrige Elektrotauchlackbad eine Mikrogelteilchen-dispersion enthält, wie eingangs definiert.

Ein weiterer Gegenstand der Erfindung ist die Verwendung der erfindungsgemäßen Dispersionen in unvernetztem Zustand als Bindemittel in Druckfarben.

Die erfindungsgemäßen Dispersionen haben typischerweise eine Teilchen-Massengehalt von 10 bis 60 %, bevorzugt 20 bis 50 %, gemessen als Trockenrückstand bei 120 °C nach 2stündiger Trocknung, und eine Teilchengrößenverteilung derart, daß 90 % der Zahl der Teilchen einen Durchmesser zwischen 5 und 500 nm, bevorzugt 10 bis 400 nm und besonders bevorzugt 30 bis 300 nm aufweisen.

Für die Erfindung geeignet sind aliphatische Vinylmonomere, wie Vinylester von aliphatischen Carbonsäuren mit 1 bis 18 Kohlenstoffatomen im Säurerest, Vinyläther und Vinylketone mit jeweils 1 bis 8 Kohlenstoffatomen im Alkylrest, Vinyl- und Vinylidenhalogenide, Alkylester mit 1 bis 18 Kohlenstoffatomen im Alkylrest und Hydroxyalkylester mit 2 bis 10 Kohlenstoffatomen im Alkylrest von α,β-olefinisch ungesättigten Carbonsäuren, die entsprechenden Säuren und deren Amide, die gegebenenfalls auch alkylsubstituiert sein können; ferner aromatische Vinylmonomere wie Styrol, Vinyltoluol und Vinylnaphthalin. Bevorzugt sind Vinylester aliphatischer Carbonsäuren mit 2 bis 6 Kohlenstoffatomen im Säurerest, Alkylester mit 1 bis 8 Kohlenstoffatomen im Alkylrest und Hydroxyalkylester mit 2 bis 10 Kohlenstoffatomen im Alkylrest der Acryl- und Methacrylsäure und Styrol. Zur Herstellung von unvernetzten Dispersionen werden Vinylmonomere eingesetzt, die einfach olefinisch ungesättigt sind. Zusatz von mehrfach olefinisch ungesättigten Verbindungen zur Monomermischung führt zu Dispersionen, die vernetzt sind und Mikrogelteilchen bilden. Bevorzugt sind Divinylmonomere wie Divinylbenzol, Butandiol-diacrylat, Glykoldivinyläther, Adipinsäuredivinylester, Allylvinyläther und dreifach ungesättigte Verbindungen wie Triallylcyanurat und Diallylfumarat. Der Stoffmengenanteil von mehrfach ungesättigten Verbindungen kann dabei bis 15 %, vorzugsweise 0,001 bis 10 %, besonders bevorzugt 0,01 bis 5 % betragen, bezogen auf die Summe der Stoffmengen der olefinisch ungesättigten Monomeren.

Die Polymerisation der Vinylmonomere wird durch. Radikalbildner initiiert. Erfindungsgemäß können als Initiatorkomponente organische Azoverbindungen, bevorzugt aliphatische Azoverbindungen, und besonders bevorzugt Azobisalkane verwendet werden. Gleichfalls geeignet sind Peroxoverbindungen, wie Peroxide, z.B. Wasserstoffperoxid, Salze von Peroxosäuren wie Persulfate und Percarbonate, organische Peroxoverbindungen wie Alkylhydroperoxide, Diacylperoxide und organische Peroxosäuren. Bevorzugt werden als Initiatorkomponente die genannten Peroxoverbindungen in Kombination mit Reduktionsmitteln eingesetzt, wie beispielsweise Sulfiten und Hyposulfiten, Hydroxylamin, Rongalit und enolisierbaren Carbonylverbindungen wie Ascorbinsäure. Der Zusatz von Salzen von Übergangsmetallen wie Eisen, Kupfer oder Cer wirkt beschleunigend.

Als Emulgatoren werden kationisch stabilisierte Polyurethane eingesetzt, in Mengen von 5 bis 50 %, bevorzugt 10 bis 30 % bezogen auf die Masse der Vinylmonomeren. Sie sind erhältlich durch Umsetzung einer Isocyanatkomponente bestehend aus mindestens einem zwei- oder mehrfunktionellen Isocyanat B, einer Polyolkomponente bestehend aus mindestens einer organischen Verbindung A mit zwei oder mehr Hydroxylgruppen, und mindestens einer organischen Verbindung C, die mindestens eine tertiäre Aminogruppe sowie mindestens eine gegenüber Isocyanat reaktive Gruppe ausgewählt aus Hydroxyl-, Mercapto-, primären und sekundären Aminogruppen enthält.

Die Polyhydroxyverbindungen A sind beispielsweise ausgewählt aus den Polyhydroxypolyäthern Al, den Polyhydroxypolyestern A2, den Polyhydroxypolyesteramiden A3, den Polyhydroxypolycarbonaten A4 und den Polyhydroxypolyolefinen A5. Gegebenenfalls werden zu den Verbindungen A noch niedermolekulare Glykole wie beispielsweise Glykol selbst, Di- oder Triäthylenglykol, Propandiol-1,2 oder -1,3, Butandiol-1,4, Neopentylglykol, Hexandiol-1,6, Cyclohexandimethanol, 2,2-Bis-(4'-hydroxycyclohexyl)propan sowie mehrwertige Alkohole wie Trishydroxyalkylalkane (z.B. Trimethylolpropan) oder Tetrakishydroxyalkylalkane (z.B. Pentaerythrit) hinzugefügt. Diese Polyhydroxyverbindungen können sowohl einzeln als auch im Gemisch eingesetzt werden. Bevorzugt werden Polyhydroxypolyäther und Polyhydroxypolyester.

Die Polyhydroxypolyäther A1 können beispielsweise Polyätherdiole der Formel

H - [ -O- (CHR)ₙ- ] ₘ - OH

sein, wobei R ein Wasserstoffrest oder ein Alkylrest mit bis zu 6 C-Atomen ist, gegebenenfalls mit weiteren Substituenten, n ist eine ganze Zahl von 2 bis 6 und m ist eine ganze Zahl von 10 bis 120. Beispiele sind Polyäthylenglykole, Polypropylenglykole, deren Mischpolymere sowie Polytetramethylenglykole. Bevorzugt sind Polypropylenglykole mit einer Molmasse von 400 bis 5000 g/mol. Andere geeignete Polyhydroxypolyäther sind verzweigte Polyhydroxypolyäther der Struktur 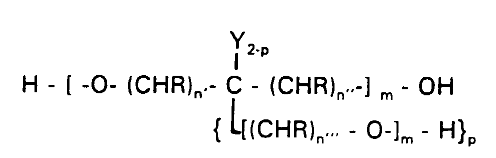 wobei bedeuten
n,n',n",n"' = 1 ... 6
m = 10 ... 120
p = 0, 1, 2
Y = H, Alkyl,
die beispielsweise durch Umsetzung von drei- oder mehrwertigen Alkoholen wie Glycerin, Trimethylolpropan und Pentaerythrit mit Epoxiden wie Äthylenoxid und/oder Propylenoxid erhalten werden. Bevorzugt werden Oligomere und Polymere abgeleitet von Äthylen- und Propylenoxid.

Die Polyhydroxypolyester A2 werden hergestellt durch Veresterung von Polycarbonsäuren oder deren Anhydriden mit organischen Polyhydroxyverbindungen. Die Polycarbonsäuren und die Polyhydroxyverbindungen können aliphatisch, aromatisch oder gemischt aliphatisch/aromatisch sein. Geeignete Polyhydroxyverbindungen sind Alkylenglykole wie Glykol, Propandiol-1,2 und -1,3, Butandiol-1,4, Neopentylglykol, Hexandiol-1,6, Cyclohexandimethanol, 2,2-Bis-(4'-hydroxycyclohexyl)propan sowie mehrwertige Alkohole wie Trishydroxyalkylalkane (z.B. Trimethylolpropan) oder Tetrakishydroxyalkylalkane (z.B. Pentaerythrit). Geeignete Polycarbonsäuren mit 2 bis 18 Kohlenstoffatomen im Molekül sind beispielsweise Phthalsäure, Isophthalsäure, Terephthalsäure, Tetrahydrophthalsäure, Hexahydrophthalsäure, Bernsteinsäure, Adipinsäure, Azelainsäure, Sebacinsäure, Maleinsäure, Glutarsäure, Hexachlorheptandicarbonsäure, Tetrachlorphthalsäure, Trimellithsäure und Pyromellithsäure. Anstelle dieser Säuren können auch ihre Anhydride, soweit diese existieren, verwendet werden. Als Polycarbonsäuren lassen sich auch Dimer- und Trimerfettsäuren einsetzen. Bevorzugt werden Polyester aus Alkylenglykolen mit 2 bis 4 Kohlenstoffatomen und aliphatischen Dicarbonsäuren, bevorzugt Adipinsäure.

Andere geeignete Polyhydroxypolyester leiten sich ab von Polylactonen, beispielsweise erhältlich durch Umsetzung von ε-Caprolacton mit Polyolen. Solche Produkte sind beispielsweise in der US-PS 3,169,945 beschrieben. Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus. Diese wiederkehrenden Molekülanteile können der Formel 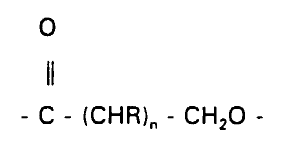 entsprechen, in der n bevorzugt 4 bis 6 ist und der Substituent R Wasserstoff, ein Alkylrest, ein Cycloalkylrest oder ein Alkoxyrest ist, wobei kein Substituent mehr als 12 Kohlenstoffatome enthält und die gesamte Anzahl der Kohlenstoffatome des Substituenten in dem Lactonring 12 nicht übersteigt.

Das als Ausgangsmaterial verwendete Lacton kann ein beliebiges Lacton oder eine beliebige Kombination von Lactonen sein, wobei dieses Lacton mindestens 6 Kohlenstoffatome in dem Ring enthalten sollte, zum Beispiel 6 bis 8 Kohlenstoffatome und wobei mindestens 2 Wasserstoffsubstituenten an dem Kohlenstoffatom vorhanden sein sollten, das an die Sauerstoffgruppe des Rings gebunden ist. Das als Ausgangsmaterial verwendete Lacton kann durch die folgende allgemeinen Formel dargestellt werden: 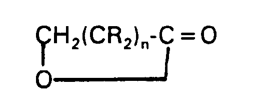 in der n und R die bereits angegebene Bedeutung haben.

Die bei der Erfindung bevorzugten Lactone sind die ε-Caprolactone, bei denen n den Wert 4 hat. Das am meisten bevorzugte Lacton ist das unsubstituierte ∈-Caprolacton, bei dem n den Wert 4 hat und alle R-Substituenten Wasserstoff sind. Dieses Lacton wird besonders bevorzugt, da es in großen Mengen zur Verfügung steht und Bindemittel mit ausgezeichneten Eigenschaften ergibt. Außerdem können verschiedene andere Lactone einzeln oder in Kombination benutzt werden.

Beispiele von für die Umsetzung mit dem Lacton geeigneten aliphatischen Polyolen sind Äthylenglykol, 1,3-Propandiol, 1,4-Butandiol, Hexandiol-1,6, Dimethylolcyclohexan, Trimethylolpropan und Pentaerythrit.

Die Polyhydroxypolyesteramide A3 leiten sich beispielsweise ab von Polycarbonsäuren und Aminoalkoholen im Gemisch mit Polyhydroxyverbindungen. Geeignete Polycarbonsäuren und Polyhydroxyverbindungen sind unter A2 beschrieben, geeignete Aminoalkohole sind beispielsweise Äthanolamin und Monoisopropanolamin.

Die Polyhydroxypolycarbonate A4 sind bevorzugt Polycarbonat-diole, die der allgemeinen Formel 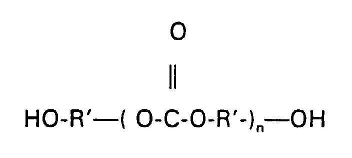 entsprechen, worin R' einen Alkylenrest bedeutet. Diese OH-funktionellen Polycarbonate lassen sich durch Umsetzung von Polyolen wie Propandiol-1,3, Butandiol-1,4, Hexandiol-1,6, Diäthylenglykol, Triäthylenglykol, 1,4-Bishydroxymethylcyclohexan, 2,2-Bis(4'-hydroxycyclohexyl)propan, Neopentylglykol, Trimethylolpropan, Pentaerythrit, mit Dicarbonaten, wie Dimethyl-, Diäthyl- oder Diphenylcarbonat, oder Phosgen herstellen. Gemische solcher Polyole können ebenfalls eingesetzt werden.

Die Polyhydroxypolyolefine A5 leiten sich beispielsweise ab von oligomeren und polymeren Olefinen mit mindestens zwei endständigen Hydroxygruppen, bevorzugt ist alpha, omega-Dihydroxypolybutadien zu nennen.

Weitere ebenfalls geeignete Polyhydroxyverbindungen sind Polyacetale, Polysiloxane und Alkydharze.

Die mehrfunktionellen Isocyanate B sind die üblicherweise in der Polyurethanchemie verwendeten. Beispiele für geeignete Isocyanate sind die aliphatischen Diisocyanate Trimethylendiisocyanat, Tetramethylendiisocyanat, Pentamethylendiisocyanat, Hexamethylendiisocyanat (HDI), 1,5-Diisocyanato-2-methylpentan, 1,12-Diisocyanatododecan, Propylendiisocyanat, Äthylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4- und 2,6-Toluylendiisocyanat (TDI), 4,4'-Biphenylendiisocyanat, 4,4'-Diphenylmethandiisocyanat (MDI), 1,5-Naphthylendiisocyanat, 1,4-Naphthylendiisocyanat, 1-Isocyanatomethyl-5-isocyanato-1,3,3-trimethylcyclohexan (IPDI), Bis-(4-isocyanatocyclohexyl)methan, 2,2-Bis-(4'-isocyanatocyclohexyl)propan, 4,4'-Diisocyanatodiphenyläther, 2,3-Bis-(8-isocyanatooctyl)-4-octyl-5-hexylcyclohexen, Tetramethylxylylendiisocyanat (TMXDI), Isocyanurate von obigen Diisocyanaten sowie Allophanate von obigen Diisocyanaten. Gemische solcher Isocyanate können ebenfalls eingesetzt werden. Bevorzugt werden die aliphatischen Isocyanate IPDI und HDI, sowie TMXDI, TDI und MDI sowie dessen mehrkernige Oligomere.

Die Verbindungen C weisen mindestens eine gegenüber Isocyanat reaktive Gruppe und mindestens eine kationische oder kationogene Gruppe auf. Die kationische oder kationogene Gruppe ist bevorzugt abgeleitet von tertiären Aminogruppen. Die gegenüber Isocyanat reaktive Gruppen sind ausgewählt aus Hydroxylgruppen, primären und sekundären Aminogruppen sowie Mercaptogruppen. Diese Gruppen können auch in Mischung in den Verbindungen gemäß C vorhanden sein, sofern die Anzahl der gegenüber Isocyanat reaktive Gruppen zwei oder mehr ist. Als Verbindungen C werden als bevorzugt genannt Polyamine mit mindestens einer tertiären und mindestens einer primären oder sekundären Aminogruppe, Verbindungen mit mindestens einer tertiären Aminogruppe und mindestens einer Hydroxy- und/oder Mercapto-Gruppe. Besonders bevorzugt wird Dimethylaminopropylamin.

Die Mengen der Komponenten A, B und C werden so gewählt, daß sich für das kationische Polyurethan eine Aminzahl von 5 bis 40, bevorzugt 10 bis 30, und besonders bevorzugt ungefähr 17 bis 25 mg/g (bezogen auf das Festharz) ergibt.

Die Herstellung der erfindungsgemäßen wäßrigen Dispersionen erfolgt bevorzugt, indem zu der wäßrigen Dispersion des kationisch stabilisierten Polyurethans bei einer Temperatur zwischen 60 und 98 °C, bevorzugt 70 bis 95 °C im ersten Schritt jeweils ein Anteil von 5 bis 20 % der Initiatorkomponente und der Vinylmonomerkomponente zugegeben wird, und nach einer Vorreaktionszeit von 2 bis 20 min die restlichen Menge von 80 bis 95 % der Initiator- und der Vinylmonomerkomponente zudosiert werden. Die zweite Dosierung erfolgt gleichmäßig über einen Zeitraum von 60 bis 240 Minuten. In einer weiteren bevorzugten Ausführungsform des erfindungsgemäßen Verfahrens wird 10 bis 60 Minuten nach Ende der zweiten Zudosierung eine weitere Menge der Initiatorkomponente während einer Zeit von 2 bis 20 Minuten zugesetzt. Der Anteil der dritten Dosage an der Gesamtmenge der Initiatorkomponente beträgt zwischen 2 und 20 %. Die Dispersion wird noch 60 bis 240 Minuten bei der Reaktionstemperatur gehalten und danach filtriert.

Durch Ersatz eines Teils von 1 bis 50 %, bevorzugt 2 bis 20 % der Stoffmenge der einfach ungesättigten Vinylmonomeren durch zwei- oder mehrfach ungesättigte erhält man bei dem erfindungsgemäßen Verfahren vernetzte Dispersionen. Je nach Anteil der mehrfach ungesättigten Vinylmonomere ergibt sich eine niedrige oder hohe Vernetzungsdichte und damit eine niedrige oder hohe Härte der dispergierten Teilchen.

Die erfindungsgemäßen Mikrogel-Dispersionen können als Additiv in ETL-Bädern verwendet werden. Sie werden üblicherweise in einer Menge von 0,1 bis 10 %, bevorzugt 0,5 bis 5 %, und besonders bevorzugt 1 bis 3 %, berechnet als Festharz bezogen auf die Masse der Badflüssigkeit zugegeben. Der Zusatz der erfindungsgemäßen Mikrogel-Dispersionen zu einem üblichen Kataphorese-Bad enthaltend kathodisch abscheidbare Bindemittel bewirkt eine Verbesserung der Gleichmäßigkeit der Schichtdicke in der Nähe von scharfen Kanten bei gleicher Abscheidespannung und -zeit gegenüber einem ansonsten gleiche Bad ohne diesen Zusatz.

Die erfindungsgemäßen Elektrotauchlackbäder enthalten alle hierfür üblichen Bindemittel, Vernetzer, Pigmente, Katalysatoren und Additive. Als Bindemittel kommen beispielsweise in Frage selbst- oder bevorzugt fremdvernetzende kationische aminmodifizierte Epoxidharze.

Unter kationischen aminmodifizierten Epoxidharzen werden kationische Reaktionsprodukte aus gegebenenfalls modifizierten Polyepoxiden, primären und/oder sekundären Aminen bzw. deren Salzen und/oder Salzen von tertiären Aminen und gegebenenfalls Polyolen, Polycarbonsäuren, Polyaminen oder Polysulfiden verstanden.

Als Bindemittel kommen auch kationische Aminourethanharze in Frage, wie sie in EP-A 0 274 721, EP-A 0 272 665 und EP-A 234 395 beschrieben sind.

Soweit diese Bindemittel nicht selbstvernetzend sind, werden als Vernetzungsmittel Phenoplaste, polyfunktionelle Mannichbasen, Melaminharze, Benzoguanaminharze oder blockierte Polyisocyanate eingesetzt.

Die Herstellung von Pigmentpasten ist allgemein bekannt (vgl. D.H. Parker, Principles of Surface Coating Technology, Interscience Publishers, New York (1965); R.L. Yates, Electropainting, Robert Draper Ltd., Teddington/England (1966); H.F. Payne, Organic Coating Technology, Band 2, Wiley and Sons, New York (1961)). Die Pigmentpasten können im Prinzip alle für Elektrotauchlacke geeigneten Pigmente enthalten. Im allgemeinen ist Titandioxid das einzige oder das hauptsächliche weiße Pigment. Andere weiße Pigmente oder Streckmittel, wie Antimonoxid, Zinkoxid, basisches Bleicarbonat, basisches Bleisulfat, Bariumcarbonat, Porzellan, Ton, Calciumcarbonat, Aluminiumsilikat, Siliciumdioxid, Magnesiumcarbonat und Magnesiumsilikat können aber auch verwendet werden. Als farbige Pigmente können beispielsweise Cadmiumgelb, Chinacridonrot, Ruß, Phthalocyaninblau, Chromgelb, Toluidylrot und hydratisiertes Eisenoxid benutzt werden.

Die Pigmentpaste kann neben den Pigmenten auch noch Weichmacher, Füllstoffe, Netzmittel usw. enthalten.

Die Pigmentpaste wird in einer solchen Menge zur wäßrigen Dispersion des kathodisch abscheidbaren Kunstharzes gegeben, daß das fertige Elektrotauchlackbad die für die Abscheidung erforderlichen Eigenschaften aufweist. In den meisten Fällen beträgt das Massenverhältnis zwischen Pigment und kathodisch abscheidbarem Kunstharz 0,05 bis 0,5.

Die erfindungsgemäße Mikrogel-Dispersion wird bei der Lackzubereitung zugesetzt.

Die erfindungsgemäßen Elektrotauchlackbäder können neben dem kathodisch abscheidbaren Kunstharz, der Pigmentpaste und der erfindungsgemäßen Mikrogelteilchen-Dispersion noch weitere übliche Zusatzstoffe enthalten, wie z.B. Zusatzlösungsmittel, Antioxidantien, oberflächenaktive Mittel usw.

Der Festkörpergehalt der erfindungsgemäßen Elektrotauchlackbäder beträgt vorzugsweise 7 bis 35 %, besonders bevorzugt 12 bis 25 %. Der pH-Wert der Elektrotauchlackbäder liegt zwischen 4 und 8, vorzugsweise zwischen 5 und 7,5.

Die erfindungsgemäßen Elektrotauchlackbäder lassen sich zum Überziehen von beliebigen elektrisch leitenden Substraten, insbesondere aber zum Überziehen von Metallen, wie Stahl, Aluminium, Kupfer und dergleichen verwenden. Der Stahl kann verzinkt, phosphatiert oder nicht-phosphatiert sein.

Das Elektrotauchlackbad wird mit einer elektrisch leitenden Anode und mit dem als Kathode geschalteten elektrisch leitfähigen Substrat in Berührung gebracht. Beim Durchgang von elektrischem Strom zwischen Anode und Kathode wird ein fest haftender Lackfilm auf der Kathode abgeschieden.

Die Temperatur des Elektrotauchlackbades soll zwischen 15 bis 40 °C, bevorzugt zwischen 25 und 35 °C liegen.

Die angelegte Spannung kann in einem großen Bereich schwanken und kann z.B. zwischen 2 und 1000 V liegen. Typischerweise wird aber mit Spannungen zwischen 50 und 500 V gearbeitet. Die Stromdichte liegt in der Regel zwischen etwa 10 und 3000 A/m². Im Verlauf der Abscheidung fällt die Stromdichte ab.

Nach der Abscheidung wird der beschichtete Gegenstand abgespült und ist zum Einbrennen bereit.

Die abgeschiedenen Lackfilme werden im allgemeinen bei Temperaturen von 130 bis 200 °C über eine Zeitdauer von 10 bis 60 Minuten, vorzugsweise bei 150 bis 180 °C über eine Zeitdauer von 15 bis 30 Minuten, eingebrannt.

Eine weitere erfindungsgemäße Verwendung der Dispersionen in unvernetztem Zustand ist als Komponente von kationisch deinkbaren Druckfarben. Es wurde überraschenderweise gefunden, daß Druckfarben, die die erfindungsgemäßen Dispersionen enthalten, schneller trocknen als Druckfarben mit den bekannten Bindemitteln.

Die Erfindung wird durch die nachfolgenden Beispiele erläutert.

Alle Prozentangaben und Gewichtsteile bedeuten Massengehalte, %-Angaben sind so zu lesen, daß sie in der Summe 100 % ergeben.

### Beispiele

### Beispiel 1 Emulgator

2 mol Diäthylenglykolmonobutyläther, 5,66 mol Butylglykol und 1,13 mol Trimethylolpropan werden vorgelegt, bei 80 °C werden 5,89 mol ®Desmodur VL über 4 Stunden zudosiert. Nach Erreichen eines NCO-Wertes von 2,6 % wird 0,75 mol N,N-Dimethylaminopropylamin zugegeben. Dabei steigt die Guttemperatur auf ca. 110 °C an. Nach Abkühlen auf 95 °C werden 0,6 mol Ameisensäure als 50 %ige wäßrige Lösung zugegeben und eingerührt. Anschließend wird mit deionisiertem Wasser dispergiert und auf ein Feststoffgehalt von 55% eingestellt.

### Beispiel 2 Dispersion

524 g einer 55 %igen Dispersion des kationischen Polyurethans aus Beispiel 1 und 975,6 g vollentsalztes (VE) Wasser werden vorgelegt. Diese Mischung wird auf 90 °C erwärmt und dann jeweils 10 % einer Lösung aus a) 6,6 g tert.-Butylhydroperoxid 80 %ig in 100 g VE-Wasser, b) 10,4 g Ascorbinsäure in 100 g VE-Wasser und c) einer Mischung aus 651,6 g Styrol, 20,4 g Hydroxyäthylmethacrylat, 28,8 g Dodecanthiol und 55,4 g Isooctylbutyrat zugegeben. Der Zulauf wird gestoppt und die Reaktionsmischung 10 min bei 90 ± 2 °C gerührt. Nach dieser Haltephase werden die jeweiligen restlichen Lösungen über 90 min bei ± 2 °C gleichmäßig parallel zur Reaktionsmischung zudosiert. 30 min nach dem Dosierende wird über 5 min eine Lösung aus 0,6 g tert.-Butylhydroperoxid 80 %ig und 1 g Ascorbinsäure in 100 g VE-Wasser zugegeben. Die Dispersion wird noch 2 h bei 90 °C gehalten und nach Abkühlen filtriert. Man erhält eine feinteilige Dispersion mit einem Feststoffgehalt von 40 %, einem Säuregehalt von 20,7 mmol/100 g bezogen auf Feststoff und einem pH-Wert von 4,8.

### Beispiel 3 vernetzte Dispersion

Zu einer Dispersion aus 545,5 g einer 55 %igen Dispersion des kationischen Polyurethans aus Beispiel 1 und 954,6 g VE-Wasser werden bei 90 ± 2 °C jeweils 10 % der Lösungen aus a) 6,7 g tert.-Butylhydroperoxid 80 % in Wasser und 100 g VE-Wasser, b) 11 g Ascorbinsäure in 100 g VE-Wasser und c) 54,5 g Divinylbenzol und 627,1 g Styrol gegeben. Nach 10 min Pause werden die restlichen 90 % der jeweiligen Lösungen über 90 min gleichmäßig und parallel bei 90 ± 2 °C zudosiert. 30 min nach Dosierende wird über 5 min eine Lösung aus 0,7 g tert.-Butylhydroperoxid 80 %ig und 1,1 g Ascorbinsäure in 100 g VE-Wasser zugegeben. Danach wird die Dispersion noch 2 h bei 90 °C gehalten und nach dem Abkühlen filtriert. Man erhält eine feinteilige Mikrogeldispersion, die in organischen Lösungsmitteln nicht klar löslich ist, mit einem Feststoffgehalt von 40 %, einem pH-Wert von 4,5 und einem Säuregehalt von 21 mmol/100 g bezogen auf Feststoff.

### Beispiel 4 Herstellung der Pigmentpaste

Analog der DE 39 40 781 (Beispiel 5) wird eine Dibutylzinnoxid-enthaltende Katalysatorpaste hergestellt:
**4.1 Epoxid-Amin-Addukt**
Zu einer Lösung von 204 Teilen (2 mol) N,N-Dimethylaminopropylamin in 1224 Teilen Äthoxypropanol werden bei 60 bis 80 °C während einer Stunde 1708 Teile (4 mol) Denaco1® EX-145 (Phenol-(EO5)-glycidyläther) zugefügt. Die Mischung wird anschließend bei 80 bis 100 °C gehalten, bis der Epoxidgehalt unter die Nachweisgrenze gesunken ist (Aminzahl bezogen auf den Feststoff ca. 117 mg/g; Feststoffgehalt ca. 50%).
**4.2 Urethan**
Zu 348 Teilen Desmodur® T80 (Mischung von 80 % 2,4- und 20 % 2,6-Toluylendiisocyanat) in 296 Teilen Xylol werden bei 40 bis 60 °C 540 Teile Iso-Octadecylalkohol und 0,9 Teile Dibutylzinndilaurat während einer Stunde zugefügt. Die Mischung wird bei dieser Temperatur gehalten, bis der Massengehalt an freiem Isocyanat auf ca. 9,5 gesunken ist (Feststoffgehalt ca. 75 %).
**4.3 Epoxyurethan**
1280 Teile (2 Mol Epoxid) von Beckopox® SEP 311 (75%ig in Xylol) werden auf 80 °C erwärmt. Zu dieser Lösung werden während einer Stunde 1184 Teile des Urethans (Beispiel 4.2, 75%ig) zugefügt. Die Mischung wird bei 80 °C gehalten, bis kein freies Isocyanat mehr nachweisbar ist. Anschließend wird das Lösungsmittel unter vermindertem Druck abdestilliert, der Rückstand wird mit 1232 Teilen Äthoxypropanol auf ca. 60 % Feststoffgehalt verdünnt.
**4.4 Bindemittel**
In die Lösung aus 4.3 wird die in 4.1 erhaltene Lösung eingetragen, die Mischung wird bei 60 bis 80 °C gehalten, bis die Säurezahl und der Epoxidgehalt praktisch auf Null gesunken sind. Die Mischung wird auf einen Feststoffgehalt von 55 % mit Butylglykol verdünnt.
**4.5 Anreibeharz (Beispiel 3 der EP-A 0 183 025)**
In einem mit Rührer, Thermometer, Zugabetrichter, Rückflußkühler und Wasserabscheider versehenen Reaktionsgefäß werden 380 Teile eines Epoxidharzes auf Basis von Bisphenol A (Molmasse dividiert durch die mittlere Anzahl an Epoxidgruppen pro Molekül "Epoxidäquivalent" ca. 190 g/mol) mit 268 Teilen Talgfettamin und 104 Teilen N,N-Diäthylaminopropylamin bei 75 bis 80 °C umgesetzt, bis der Epoxidgehalt auf Null gesunken ist. Nach Abkühlen auf 80 °C werden 60 Teile Paraformaldehyd (91 %ig) zugegeben, mit Toluol als Schleppmittel werden 38 Teile Reaktionswasser azeotrop abdestilliert. Das Schleppmittel wird unter vermindertem Druck abdestilliert, der Rückstand wird in 90 Teilen 2-Methoxypropanol aufgenommen. Das Harz weist folgende Kenngrößen auf:

| | |
|---|---|
| Viskosität bei 25 °C: | 7000 mPa·s |
| Aminzahl | 188 mg/g |
| Massenanteil aliphatischer Strukturen | 33 % |
| Molmasse (berechnet) | 774 g/mol |
| Feststoffgehalt | 55 % |

**4.6 Katalysatorpaste (Beispiel 5 der DE-A 39 40 781)**
30 g 2-Äthoxypropanol, 3 g eines handelsüblichen Netzmittels, 2 g Eisessig und 40 g Dibutylzinnoxid werden in einem Dissolver gemischt und 2 Stunden bei 60 °C dispergiert. 60 g des Anreibeharzes aus Beispiel 4.5 und 64 g voll entsalztes (VE-)Wasser werden zugesetzt, die Mischung wird in einer Mühle auf die erforderliche Kornfeinheit vermahlen.
**4.7 Pastenharz**
10,6 Teile des Bindemittels aus Beispiel 4.4, 0,6 Teile Essigsäure (50%ig), 0,6 Teile 2,4,7,9-Tetramethyl-5-decin-4,7-diol (Surfynol 104®, Netzmittel) und 12,3 Teile der Katalysator-Paste aus Beispiel 4.6 werden miteinander vermischt. Dazu werden unter Rühren 4,0 Teile Bleisilikat, 0,4 Teile Ruß und 40,2 Teile Titandioxid gegeben. Man stellt mit 31,3 Teilen VE-Wasser auf eine geeignete Viskosität ein und vermahlt die Pigmentpaste auf einer entsprechenden Mühle auf eine ausreichende Korngröße.

### Beispiel 5 Amino-Epoxidharz

In einem Reaktionsgefäß, das mit Rührer, Thermometer, Tropftrichter und Rückflußkühler ausgerüstet ist, werden zu einer Lösung aus 566,4 g Polyglycidyläther auf Basis Bisphenol A mit einem Epoxidäquivalentgewicht von 472 g/mol, in 322 g Methoxypropanol, 52,6 g ®Texanol, 42 g Diäthanolamin bei 40 °C zudosiert. Anschließend werden 20,4 g Dimethylaminopropylamin und 123,2 g eines Adduktes von 116 g 1,6-Diaminohexan mit 500 g Cardura® E 10 (Glycidylester einer in α-Stellung verzweigten Monocarbonsäure mit 9 bis 11 C-Atomen) bei 40 bis 50 °C zugesetzt und die Lösung langsam auf 90 bis 100 °C aufgeheizt. Zur Vervollständigung der Reaktion hält man die angegebene Temperatur noch 3 Stunden. Der Epoxidgehalt ist dann Null.

| | |
|---|---|
| Aminzahl | 98 (mg KOH/g Festharz) |
| Festkörper-Massengehalt | 70 % |

### Beispiel 6 Bindemittel aus Harz und Härter

In einem Reaktionsgefäß, das mit Rührer, Thermometer, Tropftrichter und Rückflußkühler ausgerüstet ist, wird das auf 90 bis 100 °C erwärmte Amino-Epoxidharz gemäß Beispiel 5 vorgelegt und einer Vakuumdestillation unterworfen. Sobald die gesamte Menge Lösungsmittel abgezogen ist, wird auf 90 bis 95 °C abgekühlt. Diese Mischung wird mit 11 g 85 %iger Ameisensäure neutralisiert. Auf 7 Teile Feststoff dieser Bindemitteldispersion werden 3 Teile Feststoff des Härters aus Beispiel 1 gegeben, die Mischung wird bei 60 bis 80 °C gehalten, bis Säurezahl und Epoxidgehalt praktisch auf Null gesunken sind. Anschließend wird entmineralisiertes Wasser untergemischt, bis der Festkörpermassengehalt 40 % beträgt.

### Beispiel 7 Lackzubereitung

300 Teile Bindemittel-Dispersion (40 %ig) gemäß Beispiel 6 werden mit 180 Teilen VE-Wasser unter Rühren auf ca. 25 % Festkörpergehalt verdünnt. Diese Klarlacklösung wird mit 109 Teilen Pigmentpaste gemäß Beispiel 4.7 und 1,2 Teilen 50 %iger Ameisensäure versetzt. Anschließend wird mit VE-Wasser auf einen Festkörpergehalt von ca. 18 % eingestellt. Das Pigment-Bindemittel-Verhältnis beträgt ca. 0,4:1.

### Beispiel 8 Abscheidung/Abscheideergebnisse

Die Lackzubereitungen werden der kataphoretischen Abscheidung in einem offenen Glasgefäß unterworfen. Als Kathode dienen verzinkte Substrate und als Anode, im Abstand von 5 bis 10 cm von der Kathode, blankes Stahlblech. Die Badtemperatur beträgt 28 °C, die Abscheidedauer beträgt 2 Minuten. Die Rührung erfolgt über einen PTFE-beschichteten Magnetrührstab.

Zu der Lackzubereitung werden von dem erfindungsgemäßen Additiv I (gemäß Beispiel 2) und Additiv II (gemäß Beispiel 3) jeweils 1 bzw. 3 % Festharz bezogen auf die Masse der Badflüssigkeit gegeben.

Die jeweils erzielten Filmdicken und die Oberflächenqualität der abgeschiedenen und anschließend gehärteten Filme (Einbrennbedingung 20 min, Ofentemperatur von 165 °C) sowie die Prüfung des Kantenschutzes auf Lochblechen nach Salzsprühbelastung (Herberts GmbH; Prüfung des Kantenschutzes bei der Elektrotauchlackierung) sind in der nachstehenden Tabelle wiedergegeben:

| | 0-Probe | Zugabe von Additiv I 1% | Zugabe von Additiv I 3 % | Zugabe von Additiv II 1% | Zugabe von Additiv II 3% |
|---|---|---|---|---|---|
| Schichtdicke in pm | 20 | 20 | 20 | 20 | 20 |
| Ra-Wert in µm | 0,28 | 0,30 | 0,45 | 0,28 | 0,55 |
| Kantenschutz | n.i.O. | b.i.O. | i.O. | b.i.O. | i.O. |
| n.i.O nicht in Ordnung | | | | | |
| b.i.O. beinahe in Ordnung | | | | | |
| i.O. in Ordnung | | | | | |
| Ra-Wert mittlere Rauhtiefe | | | | | |

## Patentansprüche

1. Verwendung von wäßrigen Dispersionen als Zusatz zu kationisch abscheidbaren Elektrotauchlackbädern, hergestellt durch radikalisch initiierte Emulsionspolymerisation von einem oder mehreren Vinylmonomeren in Wasser in Gegenwart eines kationisch stabilisierten Polyurethans als Emulgator in einer Menge von 5 bis 50 % bezogen auf die Masse der Vinylmonomeren, wobei das kationisch stabilisierte Polyurethan eine Aminzahl von 5 bis 40 mg/g bezogen auf das Festharz aufweist und erhältlich ist durch Umsetzung einer Isocyanatkomponente B bestehend aus mindestens einem zwei- oder mehrfunktionellen Isocyanat, einer Polyolkomponente A bestehend aus mindestens einer organischen Verbindung mit zwei oder mehr Hydroxylgruppen, und mindestens einer organischen Verbindung C, die mindestens eine tertiäre Aminogruppe sowie mindestens eine gegenüber Isocyanat reaktive Gruppe ausgewählt aus Hydroxyl-, Mercapto-, primären und sekundären Aminogruppen enthält

2. Verwendung nach Anspruch 1, dadurch gekennzeichnet, daß die Vinylmonomeren ausgewählt sind aus Vinylestern aliphatischer Carbonsäuren mit 2 bis 6 Kohlenstoffatomen im Säurerest, Alkylestern mit 1 bis 8 Kohlenstoffatomen und Hydroxyalkylestern mit 2 bis 10 Kohlenstoffatomen der Acryl- und Methacrylsäure und Styrol.

3. Verwendung nach Anspruch 1, dadurch gekennzeichnet, daß als Initiator für die Polymerisation ein Redoxsystem aus Peroxid und Reduktionsmittel eingesetzt wird.

4. Verwendung nach Anspruch 1, dadurch gekennzeichnet, daß zusätzlich ein Salz eines Übergangsmetalls als Beschleuniger eingesetzt wird.

5. Verwendung nach Anspruch 1, dadurch gekennzeichnet, daß die Polyhydroxyverbindungen A ausgewählt sind aus Polyhydroxypolyäthern und Polyhydroxypolyestern.

6. Verwendung nach Anspruch 1, dadurch gekennzeichnet, daß die als Polyisocyanat-Komponente B eingesetzten Verbindungen ausgewählt sind aus Isophorondiisocyanat, Hexamethylendiisocyanat, Tetramethylxylylendiisocyanat, Toluylendiisocyanat und 4,4'-Diphenylmethandiisocyanat sowie dessen mehrkernige Oligomeren.

7. Verwendung nach Anspruch 1, dadurch gekennzeichnet, daß zu einer wäßrigen Dispersion des kationisch stabilisierten Polyurethans im ersten Schritt jeweils ein Anteil von 5 bis 20% der Initiatorkomponente und der Vinylmonomerkomponente zugegeben wird, und nach einer Vorreaktionszeit von 2 bis 20 min die restlichen Mengen der Initiator- und der Vinylmonomerkomponente zudosiert werden.

8. Verwendung nach Anspruch 7, dadurch gekennzeichnet, daß 10 bis 60 Minuten nach Ende der zweiten Zudosierung eine weitere Menge der Initiatorkomponente zugesetzt wird, deren Anteil an der Gesamtmenge der Initiatorkomponente zwischen 2 und 20 % beträgt.

9. Verwendung nach Anspruch 1, dadurch gekennzeichnet, daß bis zu 15 % der Vinylmonomeren mehrfach olefinisch ungesättigt sind.

10. Verwendung nach Anspruch 1, dadurch gekennzeichnet, daß mindestens 90 % der Teilchen in dem Emulsionspolymerisat Durchmesser zwischen 5 und 500 nm aufweisen.

11. Verwendung nach Anspruch 1, dadurch gekennzeichnet, daß der Massengehalt an dispergierten Teilchen zwischen 10 und 60 % liegt.

12. Verwendung nach Anspruch 1, dadurch gekennzeichnet, daß dispergierten Teilchen vernetzt sind und ein Mikrogel bilden.

13. Verwendung von wäßrigen Dispersionen in Bindemitteln für Druckfarben, wobei die wäßrigen Dispersionen hergestellt werden durch radikalisch initiierte Emulsionspolymerisation von einem oder mehreren Vinylmonomeren in Wasser in Gegenwart eines kationisch stabilisierten Polyurethans als Emulgator in einer Menge von 5 bis 50 % bezogen auf die Masse der Vinylmonomeren, wobei das kationisch stabilisierte Polyurethan eine Aminzahl von 5 bis 40 mg/g bezogen auf das Festharz aufweist und erhältlich ist durch Umsetzung einer Isocyanatkomponente B bestehend aus mindestens einem zwei- oder mehrfunktionellen Isocyanat, einer Polyolkomponente A bestehend aus mindestens einer organischen Verbindung mit zwei oder mehr Hydroxylgruppen, und mindestens einer organischen Verbindung C, die mindestens eine tertiäre Aminogruppe sowie mindestens eine gegenüber Isocyanat reaktive Gruppe ausgewählt aus Hydroxyl-, Mercapto-, primären und sekundären Aminogruppen enthält.

14. Verfahren zum Beschichten von elektrisch leitfähigen Substraten nach dem Elektrotauchlackverfahren, wobei das Substrat als Kathode geschaltet ist, und in der Badflüssigkeit ein Zusatz von 0,1 bis 10 % der Dispersion nach Anspruch 1 verwendet wird.

## Claims

1. The use of an aqueous dispersion as an additive to cationically depositable electrodeposition baths, prepared by free-radically initiated emulsion polymerization of one or more vinyl monomers in water in the presence of a cationically stabilized polyurethane as emulsifier in an amount of from 5 to 50 % based on the mass of the vinyl monomers, the cationically stabilized polyurethane having an amine number of from 5 to 40 mg/g based on the solid resin and being obtainable by reacting an isocyanate component B, consisting of at least one difunctional or polyfunctional isocyanate, a polyol component A, consisting of at least one organic compound having two or more hydroxyl groups, and at least one organic compound C which contains at least one tertiary amino group and also at least one isocyanate-reactive group selected from hydroxyl, mercapto, primary and secondary amino groups.

2. The use as claimed in claim 1, wherein the vinyl monomers are selected from vinyl esters of aliphatic carboxylic acids having 2 to 6 carbon atoms in the acid residue, alkyl esters having 1 to 8 carbon atoms and hydroxylalkyl esters having 2 to 10 carbon atoms of acrylic and methacrylic acid, and styrene.

3. The use as claimed in claim 1, wherein a redox system comprising peroxide and reducing agent is employed as initiator for the polymerization.

4. The use as claimed in claim 1, wherein a salt of a transition metal is additionally employed as accelerator.

5. The use as claimed in claim 1, wherein the polyhydroxy compounds A are selected from polyhydroxypolyethers and polyhydroxypolyesters.

6. The use as claimed in claim 1, wherein the compounds employed as polyisocyanate component B are selected from isophorone diisocyanate, hexamethylene diisocyanate, tetramethylxylene diisocyanate, tolylene diisocyanate and 4,4'-diphenylmethane diisocyanate and also polynuclear oligomers thereof.

7. The use as claimed in claim 1, wherein in the first step a proportion of in each case from 5 to 20 % of the initiator component and of the vinyl monomer component is added to an aqueous dispersion of the cationically stabilized polyurethane and, after an initial reaction time of from 2 to 20 minutes, the remaining amounts of the initiator and of the vinyl monomer component are metered in.

8. The use as claimed in claim 7, wherein, from 10 to 60 minutes after the end of the second metered addition, a further amount of the initiator component is added which as a proportion of the overall amount of initiator component amounts to between 2 and 20 %.

9. The use as claimed in claim 1, wherein up to 15 % of the vinyl monomers are polyolefinically unsaturated.

10. The use as claimed in claim 1, wherein at least 90 % of the particles in the emulsion polymer have diameters of between 5 and 500 nm.

11. The use as claimed in claim 1, wherein the mass content of dispersed particles is between 10 and 60 %.

12. The use as claimed in claim 1, wherein dispersed particles are crosslinked and form a microgel.

13. The use of an aqueous dispersion in binders for printing ink, the aqueous dispersions being prepared by free-radically initiated emulsion polymerization of one or more vinyl monomers in water in the presence of a cationically stabilized polyurethane as emulsifier in an amount of from 5 to 50 % based on the mass of the vinyl monomers, the cationically stabilized polyurethane having an amine number of from 5 to 40 mg/g based on the solid resin and being obtainable by reacting an isocyanate component B, consisting of at least one difunctional or polyfunctional isocyanate, a polyol component A, consisting of at least one organic compound having two or more hydroxyl groups, and at least one organic compound C which contains at least one tertiary amino group and also at least one isocyanate-reactive group selected from hydroxyl, mercapto, primary and secondary amino groups.

14. A process for coating electrically conductive substrates by the electrodeposition technique, where the substrate is connected as cathode and an addition of from 0.1 to 10 % of the dispersion as claimed in claim 1 is used in the bath liquid.

## Revendications

1. Utilisation de dispersions aqueuses comme additif pour des bains de peinture par cataphorèse à dépôt cationique, préparées par polymérisation en émulsion initialisée de manière radicalaire d'un ou de plusieurs monomères de vinyle dans l'eau en présence d'un polyuréthanne stabilisé cationiquement comme agent émulsionnant en une quantité de 5 à 50% par rapport à la masse des monomères de vinyle, dans laquelle le polyuréthanne stabilisé cationiquement présente un indice d'amine de 5 à 40 mg/g rapporté à la résine solide et peut s'obtenir par réaction d'un composant isocyanate B constitué d'au moins un isocyanate di- ou pluri-fonctionnel, d'un composant polyol A constitué d'au moins un composé organique avec deux groupes hydroxyle ou plus, et d'au moins un composé organique C, qui renferme au moins un groupe amino tertiaire ainsi qu'au moins un groupe réactif vis à vis du groupe isocyanate choisi parmi les groupes hydroxyle, mercapto, amino primaire et secondaire.

2. Utilisation selon la revendication 1, caractérisée en ce que les monomères de vinyle sont choisis parmi les esters vinyliques d'acides carboxyliques aliphatiques ayant 2 à 6 atomes de carbone dans le groupe acide, les esters alkyliques avec 1 à 8 atomes de carbone et les esters d'hydroxyalkyle avec 2 à 10 atomes de carbone de l'acide acrylique et méthacrylique et du styrène.

3. Utilisation selon la revendication 1, caractérisée en ce que l'on utilise comme initiateur pour la polymérisation un système redox et un agent réducteur.

4. Utilisation selon la revendication 1, caractérisée en ce qu'on utilise en supplément un sel d'un métal de transition comme accélérateur.

5. Utilisation selon la revendication 1, caractérisée en ce les composés polyhydroxylés A sont choisis parmi les polyhydroxy-polyéthers et les polyhydroxy-polyesters.

6. Utilisation selon la revendication 1, caractérisée en ce que les composés utilisés comme composant polyisocyanate B sont choisis parmi le diisocyanate d'isophorone, le diisocyanate d'hexaméthylène, le diisocyanate de tétraméthylxylylène, le diisocyanate de toluylène et le 4,4'-diphénylméthanedisocyanate ainsi que leurs oligomères polynucléaires.

7. Utilisation selon la revendication 1, caractérisée en ce qu'on ajoute à une dispersion aqueuse du polyuréthanne stabilisé cationiquement, dans une première étape, respectivement une proportion de 5 à 20% du composant initiateur et du composant monomère de vinyle, et en ce qu'on ajoute la quantité restante du composant initiateur et de monomère de vinyle après un temps de réaction préliminaire de 2 à 30 min.

8. Utilisation selon la revendication 7, caractérisée en ce qu'on ajoute, 10 à 60 minutes après la fin de la deuxième addition, une autre quantité du composant initiateur, dont la proportion par rapport à la quantité totale de composant initiateur est entre 2 et 20%.

9. Utilisation selon la revendication 1, caractérisée en ce jusqu'à 15% des monomères de vinyle sont plusieurs fois oléfiniquement insaturés.

10. Utilisation selon la revendication 1, caractérisée en ce que au moins 90% des particules présentent, dans le polymérisat en émulsion, des diamètres entre 5 et 500 nm.

11. Utilisation selon la revendication 1, caractérisée en ce le titre en masse de particules dispersées se situe entre 10 et 60%.

12. Utilisation selon la revendication 1, caractérisée en ce les particules dispersées sont réticulées et forment un microgel.

13. Utilisation de dispersions aqueuses dans des liants pour des couleurs d'impression, dans laquelle les dispersions aqueuses sont préparées par polymérisation en émulsion initialisée de manière radicalaire d'un ou de plusieurs monomères de vinyle dans l'eau en présence d'un polyuréthanne stabilisé cationiquement comme agent émulsionnant en une quantité de 5 à 50% par rapport à la masse des monomères de vinyle, dans laquelle le polyuréthanne stabilisé cationiquement présente un indice d'amine de 5 à 40 mg/g par rapport à la résine solide et peut s'obtenir par réaction d'un composant isocyanate B constitué d'au moins un isocyanate di- ou pluri-fonctionnel, d'un composant polyol A constitué d'au moins un composé organique avec deux groupes hydroxyle ou plus, et d'au moins un composé organique C, qui renferme au moins un groupe amino tertiaire ainsi qu'au moins un groupe réactif vis à vis du groupe isocyanate, choisi parmi les groupes hydroxyle, mercapto, amino primaire et secondaire.

14. Procédé de revêtement de substrats électriquement conducteurs selon le procédé de peinture par cataphorèse, dans lequel le substrat est relié à la cathode, et on utilise dans le liquide du bain un ajout de 0,1 à 10% de la dispersion selon la revendication 1.
